# EUROPÄISCHE PATENTSCHRIFT

(11) **EP 0 787 906 B1**
(45) Veröffentlichungstag und Bekanntmachung des Hinweises auf die Patenterteilung: **12.07.2000**
(21) Anmeldenummer: 96117131.1
(22) Anmeldetag: 25.10.1996
(51) Int. Cl.: F16B 5/02

(54) **Vorrichtung zur gegenseitigen Ausrichtung und Befestigung zweier Bauteile**
Device for mutually aligning and fastening two elements
Dispositif pour aligner et fixer deux éléments mutuellement

(30) Priorität: 02.02.1996 DE 19603751
(43) Veröffentlichungstag der Anmeldung: 06.08.1997
(73) Patentinhaber: ROBERT BOSCH GMBH, 70442 Stuttgart (DE)
(72) Erfinder: Kettler, Alfons, 64287 Darmstadt (DE)

(56) Entgegenhaltungen:
- DE-A- 4 313 739
- US-A- 5 028 190

## Beschreibung

### Stand der Technik

Die Erfindung geht von einer Vorrichtung zur gegenseitigen Ausrichtung und Befestigung zweier Bauteile nach der im Oberbegriff des Anspruchs 1 angegebenen Gattung aus.

Zur Befestigung zweier Bauteile oder zur Befestigung eines Bauteils an einer Wand ist es allgemein bekannt in dem ersten Bauteil Bohrungen vorzusehen, welche der Führung einer Schraube dienen, und das zweite Bauteil an den zu den Bohrungen korrespondierenden Stellen mit Gewindebohrungen zur Aufnahme der Schraubenschäfte zu versehen. Ebenso ist bekannt, Unterlegscheiben zwischen dem Schraubenkopf und dem zu befestigenden Bauteil anzubringen. Falls die dem ersten Bauteil zugewandte Seite des zweiten Bauteils Unebenheiten aufweist, ist weiterhin bekannt, zwischen dem ersten Bauteil und dem zweiten Bauteil Abstandshalter einzufügen, welche das erste Bauteil in einem definierten Abstand zum zweiten Bauteil halten. Weist das erste Bauteil beispielsweise an seiner zur Befestigung an einer unebenen Wand vorgesehenen Rückseite eine Blechwand auf, wird so eine unerwünschte Verformung der Blechwand vermieden. Alternative Lösungen, die im Tiefziehen der Blechwand zur Ausbildung von erhabenen, als Abstandselemente dienenden Flächen bestehen, sind meist teuer und technisch aufwendig. Die Abstandshalter bestehen in der Regel aus zylindrischen Grundkörpern, die mit einer Öffnung zur Durchführung der Schraube versehen sind, einfach über die Schraubenschäfte geschoben werden und beim Anziehen der Schrauben zwischen dem ersten und dem zweiten Bauteil eingeklemmt werden. Nachteilig bei dieser Montagetechnik ist, daß die im zweiten Bauteil vorgesehenen Gewindebohrungen immer mit den in dem ersten Bauteil zur Aufnahme der Schrauben vorgesehenen Bohrungen fluchten müssen, da ansonsten nicht alle Schrauben in die Gewindebohrungen eingesetzt werden können. Ebenfalls nachteilig ist, daß die beiden Bauteile nach dem Einführen der Schrauben bei noch nicht angezogenen Schrauben nicht mehr gegeneinander ausgerichtet werden können.

Zur Vermeidung dieses Nachteils ist es oft üblich, das zu befestigende Bauteil mit gegenüber dem Schraubenschaft vergrößerten Bohrungen zu versehen, welche durch jeweils eine von der Schraube aufgenommene Unterlegscheibe übergriffen werden. Der Raum zwischen dem Schaft der Schraube und der Wandung der Bohrung dient dazu, die beiden Bauteile gegeneinander auszurichten, wobei bei noch nicht angezogenen Schrauben die Lage des ersten Bauteils in bezug auf das zweite Bauteil dadurch eingestellt werden kann, daß die Schrauben innerhalb jeweils einer Bohrung eine andere Position einnehmen können.

Nachteilig bei dem Stand der Technik ist, daß weder die Position der Unterlegscheibe noch die Position des Abstandshalters in bezug auf den Schraubenschaft verändert werden kann. Bei einer Ausrichtung der Bauteile nehmen daher nicht nur die Schrauben in den dafür vorgesehenen Bohrungen des ersten Bauteils eine andere Position ein, sondern darüber hinaus werden auch die Unterlegscheibe und der Abstandshalter in bezug auf die im ersten Bauteil vorgesehene Bohrung verschoben. Dadurch ist es möglich, daß die zur Auflage des ersten Bauteils bestimmten Flächen der Unterlegscheibe und des Abstandshalters teilweise in den Bereich der Bohrung verschoben werden und dort das erste Bauteil nicht mehr kontaktieren. Beim Anziehen der Schraube ist somit eine optimale Kraftübertragung nicht möglich.

### Vorteile der Erfindung

Die erfindungsgemäße Vorrichtung mit den kennzeichnenden Merkmalen des Hauptanspruchs hat demgegenüber den Vorteil, daß bei der gegenseitigen Ausrichtung der beiden Bauelemente nicht zur eine zweidimensionale Positionsänderung des Schraubenschaftes in bezug auf das erste Bauteil möglich ist, sondern daß darüber hinaus auch eine zweidimensionale Positionsänderung der Unterlegscheibe und des Abstandshalters bezüglich des Schraubenschaftes ermöglicht wird. Hierfür sind in der Unterlegscheibe und dem Abstandshalter als Langlöcher ausgebildete Öffnungen zur Führung des Schraubenschaftes vorgesehen. Beim Ausrichten der Bauteile kann die Unterlegscheibe und der Abstandshalter so gedreht werden, daß sich die Unterlegscheibe und der Abstandshalter weiterhin in einer in bezug auf die Mittelachse der in dem ersten Bauteil vorgesehenen Öffnung konzentrischen Position befinden. Beim Anziehen der Schraube ist somit eine optimale Kraftübertragung der am Schraubenkopf anliegenden Unterlegscheibe auf das erste Bauteil und des ersten Bauteils auf den Abstandshalter gewährleistet. Um beim Drehen des Abstandshalters und der Unterlegscheibe ein Wegrutschen des Abstandshalters zwischen dem ersten Bauteil und dem zweiten Bauteil zu verhindern, ist der Abstandshalter mit abstehenden Fingern versehen, die durch die Bohrung des ersten Bauteils hindurchragen.

Vorteilhaft ist weiterhin, daß die Finger durch in der Unterlegscheibe vorgesehene Öffnungen hindurchragen, da hierdurch die Ausrichtung des in der Unterlegscheibe vorgesehenen Langlochs in bezug auf das im Abstandsteil vorgesehene Langloch fest vorgegeben wird. Außerdem wird erreicht, daß der Abstandshalter beim Drehen der Unterlegscheibe automatisch in die Richtige Position mitgedreht wird, was besonders vorteilhaft ist, da der Abstandshalter nach dem Aufsetzen des ersten Bauteils auf das zweite Bauteil nicht mehr frei zugänglich ist. Vorteilhaft bieten die Enden der Finger, die die Unterlegscheibe überragen, eine Handhabungsfläche zum Verdrehen des Abstandshalters.

Durch die Erfindung ist somit eine sichere und den Funktionsanforderungen entsprechende kostengünstige und leichthandhabbare Befestigung gewährleistet.

Vorteilhafte Weiterbildung der Erfindung werden in den Unteransprüchen beschrieben. Durch die im Unteranspruch 2 beschriebene Ausbildung der Finger als elastische Teile, an deren Enden Haken angeformt sind, wird erreicht, daß die Enden der Finger nach Durchführung durch die in der Unterlegscheibe vorgesehenen Öffnungen aufspreizen und hinter den Öffnungen einhaken. Dadurch wird ein Herausrutschen der Finger aus den Öffnungen der Unterlegscheibe beim Drehen derselben verhindert. Weiterhin wird hierdurch ein entscheidender Montagevorteil erreicht, da Abstandshalter und Unterlegscheibe auch ohne Schrauben zunächst am ersten Bauteil auf einfache Art befestigt werden können. Anschließend wird das erste Bauteil direkt mit dem Abstandshalter und der Unterlegscheibe auf das zweite Bauteil aufgesetzt, was die Handhabung der Vorrichtung während der Befestigung erheblich erleichtert.

Durch die im Anspruch 3 beschriebene Ausgestaltung der Finger und durch die im Anspruch 4 beschriebene Ausgestaltung der Langlochwand des Abstandshalters wird erreicht, daß die Lage des Abstandshalters und damit auch die Lage der Unterlegscheibe, die über die Finger mit dem Abstandshalter verbunden ist, in bezug auf die in dem ersten Bauteil vorgesehene Öffnung insoweit festgelegt ist, daß der Abstandshalter nur noch um eine Achse gedreht werden kann. Hierdurch wird erreicht, daß sich Abstandshalter und Unterlegscheibe bei der Montage immer automatisch in einer konzentrischen Position in bezug auf die Öffnung des ersten Bauteils befinden.

### Zeichnung

Ein Ausführungsbeispiel der Erfindung ist in der Zeichnung dargestellt und wird in der nachfolgenden Beschreibung näher erläutert. Es zeigt
Fig. 1 eine auseinandergezogene Darstellung der Vorrichtung ohne das zweite Bauteil,
Fig. 2 einen Querschnitt durch die Vorrichtung entlang einer Ebene, welche durch die Schraubenachse und die in dem Abstandsteil vorgesehenen Finger verläuft.

### Beschreibung des Ausführungsbeispiels

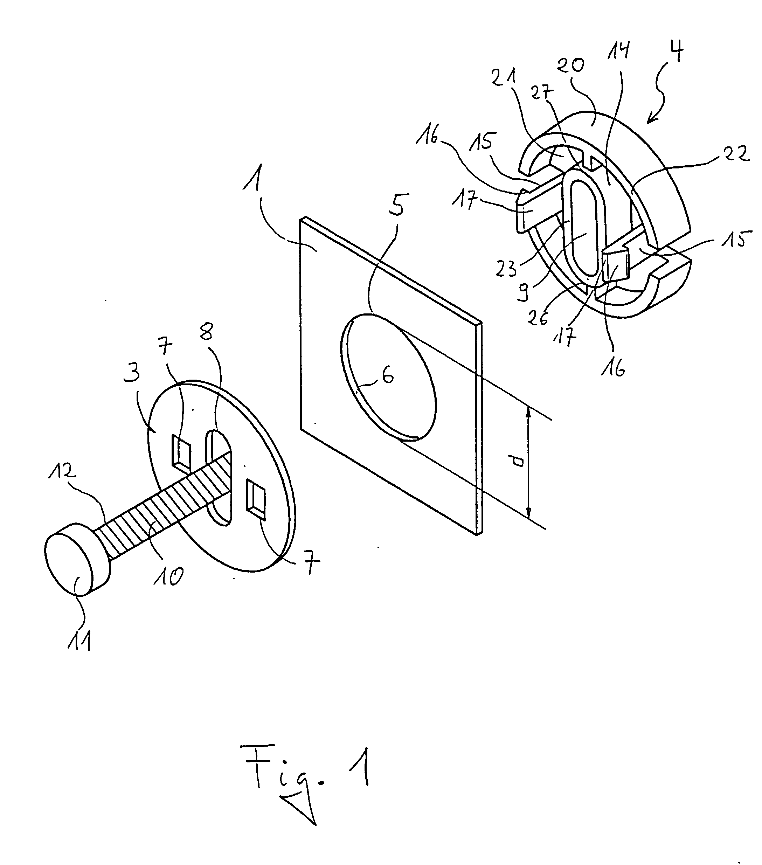

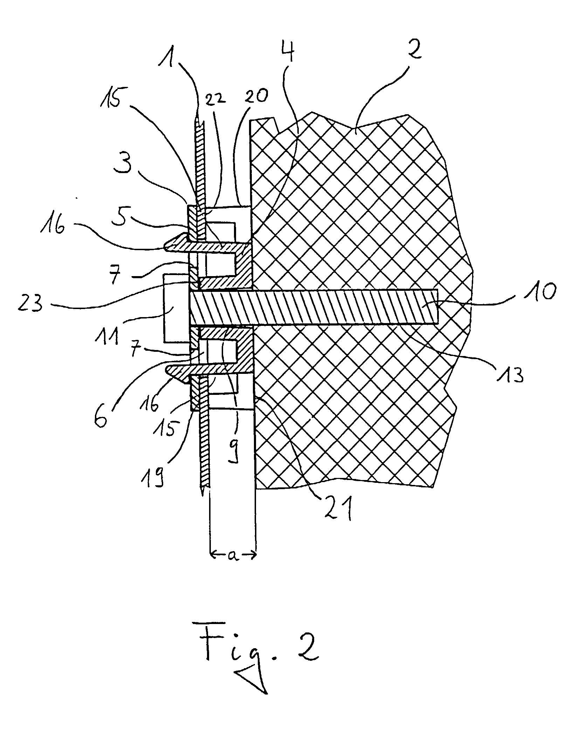

In Fig. 1 ist ein Ausführungsbeispiel der Erfindung zur Befestigung und gegenseitigen Ausrichtung zweier Bauteile dargestellt. Ein erstes Bauteil 1, das zum Beispiel der Blechboden eines Gehäuses sein kann, soll durch Schrauben 12 an einem in der Fig. 1 nicht dargestellten zweiten Bauteil 2 befestigt werden. Das zweite Bauteil 2 kann zum Beispiel ein weiterer Gehäusekasten, ein Brett oder eine Wand sein. Wie in Fig. 2 gezeigt, ist das zweite Bauteil 2 zu diesem Zweck mit Gewindebohrungen 13 zur Aufnahme eines Schraubenschaftes 10 versehen. In den Figuren 1 und 2 ist nur eine jeweils eine Schraube aufnehmende Befestigungsvorrichtung dargestellt. Es versteht sich von selbst, daß das Bauteil 1 über mehrere derartige Befestigungsvorrichtungen, zum Beispiel in Form einer Dreipunkthalterung, an dem zweiten Bauteil befestigt sein kann.

Wie in Fig. 1 gezeigt, weist das erste Bauteil 1 eine Öffnung 5 auf, die vorzugsweise als Bohrung ausgestaltet ist und deren Durchmesser d wesentlich größer als der Durchmesser des Schraubenschaftes 10 ist. Die Bohrung 5 in dem ersten Bauteil 1 dient der Durchführung des Schraubenschaftes 10 und der Ausrichtung des ersten Bauteils 1 in bezug auf den Schraubenschaft 10, der innerhalb der Bohrung in zwei Dimensionen in Richtung der die Bohrung 5 begrenzenden Innenwandung 6 frei verschoben werden kann.

Wie in Fig. 1 weiterhin dargestellt ist, besteht der in etwa becherförmige Abstandshalter 4 aus einem kreisrunden Boden 21 mit zwei in Form von Zylinderhalbschalen ausgestalteten Seitenwänden 20, deren Innenradius größer als der Radius der Öffnung 5 ist, und ist zum Beispiel aus Kunststoff oder aus Metall gefertigt. Die Seitenwände 20 können aber auch einteilig in Form einer durchgehenden Zylinderwand ausgestaltet sein. Weiterhin sind nicht unbedingt kreisrunde Strukturen notwendig. Denkbar wäre zum Beispiel eine Ausgestaltung der Wände mit einem reckteckigen, dreieckigen oder sternförmigen Grundriß. Die Stirnseite 22 der Seitenwände 20 dient der Auflage des Bauteils 1. In der Mitte des Bodens 21 des Abstandshalters 4 ist eine als Langloch ausgebildete Öffnung 9 vorgesehen. Die Öffnung 9 ist mit einer senkrecht vom Boden abstehenden, von den Zylinderhalbschalen beabstandeten Wand 14 versehen, deren Stirnseite 23 als Auflagefläche für die Unterlegscheibe 3 dient. Es ist möglich, die Wand 14 und die Wände 20 mit gleicher Höhe auszugestalten. Indem hier gezeigten Ausführungsbeispiel weist die Wand 14 eine etwas größere Höhe auf als die Wände 20. Beim Auflegen des ersten Bauteils 1 auf den Abstandshalter 4 liegt deshalb das erste Bauteil 1 auf der Stirnseite 22 der Wände 20 auf, während gleichzeitig die Wand 14 teilweise in die Öffnung 5 in Richtung der vom Abstandshalter 4 abgewandten Seite des ersten Bauteils 1 hineinragt. Hierdurch wird vorteilhaft erreicht, daß die die Länge des Langlochs 9 begrenzenden Enden 26 und 27 der Wand 14 die Lage des Abstandshalters 4 in bezug auf die Öffnung 5 mit der Einschränkung festlegen, daß eine Drehung des Abstandshalters 4 um eine durch den Mittelpunkt der Öffnung 5 verlaufende Achse möglich ist. Dabei ragt die Stirnseite 23 der Wände 14 nicht ganz durch die Öffnung 5 hindurch und ist in bezug auf die vom Abstandshalter 4 abgewandten Seite des ersten Bauteils 1 etwas in Richtung des zweiten Bauteils 2 zurückversetzt. Weiterhin weist der Abstandshalter 4 zwei sich in etwa parallel zu den Wänden 20 und 14 senkrecht erstreckende Finger 15 auf, deren Enden 17 in Form von Haken 16 ausgebildet sind, deren Abstand größer als der Durchmesser der Öffnung 5 ist. Die Finger 15 bestehen aus einem elastisch federnden Material, das vorzugsweise zugleich das Material des Abstandshalters ist. In dem gezeigten Ausführungsbeispiel sind die Finger 15 einstückig an den Abstandshalter 4 angeformt. Bei Auflage des ersten Bauteils 1 auf den Abstandshalter 4 werden die Haken 16 der elastisch federnden Finger 15 in Richtung der Öffnung 9 gedrückt, so daß die Enden 17 der Finger 15 bei weiterer Annäherung des Bauteils 1 durch die Öffnung 5 des ersten Bauteils 1 hindurchgleiten und die Haken 16 hinter der Öffnung 5 bedingt durch die elastische Spannkraft der Finger 15 wieder aufspreizen. Die Finger 15 befinden sich nun, wie in Fig. 2 gezeigt, an diametral entgegengesetzten Enden an der Innenwandung 6 der Öffnung 5, von der sie durch einen kleinen Toleranzabstand getrennt sind, so daß die Finger 15 nicht ganz an der Innenwandung 6 anliegen. Außer durch die Enden 26 und 27 der Wand 14 ist jetzt zusätzlich durch die Finger 15 die Position des Abstandshalters 4 ist in bezug auf das erste Bauteil 1, mit der Einschränkung festgelegt, daß eine Drehung der Finger 15 in der Öffnung 5 bei gleichzeitiger Drehung des Abstandshalters 4 um eine Achse, welche durch den Mittelpunkt der Öffnung 5 verläuft, ermöglicht wird. Vorteilhaft bieten die Enden 17 der Finger 15, die die Unterlegscheibe überragen, eine Handhabungsfläche zum Verdrehen des Abstandshalters 4. Der Abstandshalter, hier einstückig gezeigt, kann auch mehrteilig ausgebildet sein, wobei die vorzugsweise zwei Finger 15 einstückig mit einem die Finger verbindenden Steg eines der Bauteile bilden.

Auf die Bohrung 5 wird eine Unterlegscheibe 3 aufgelegt, die eine als Langloch ausgebildete Öffnung 8 zur Aufnahme der Schraube 12 aufweist. Die Unterlegscheibe 3 ist als kreisrunde Scheibe ausgestaltet mit einem Durchmesser, der größer als der Druchmesser d der Öffnung 5 ist. Wie insbesondere in Fig. 2 gut zu erkennen ist, überdeckt die Unterlegscheibe 3 bei Auflage auf das erste Bauteil 1 die Öffnung 5 in einem ringförmigen Bereich 19. Während nun der ringförmige Bereich 19 der Unterlegscheibe 3 auf dem ersten Bauteil 1 aufliegt, befindet sich der Randbereich der Öffnung 8 der Unterlegscheibe 3 in einem kleinen, in der Fig. 2 nicht dargestellten Abstand von der Stirnseite 23 der Wand 14 des Abstandshalters 4. Gleichzeitig werden bei der Auflage der Unterlegscheibe 3 die Enden 17 der beiden Finger 15 des Abstandshalters 4 durch zwei in der Unterlegscheibe 3 vorgesehene Öffnungen 7 geführt. Die Haken 16 spreizen dabei elastisch zurück und haken hinter den Öffnungen 7 ein. Die Lage der Öffnungen 7 ist dabei so gewählt, daß das in der Unterlegscheibe 3 vorgesehenen Langloch 8 in Längsrichtung des in dem Abstandshalter 4 vorgesehenen Langlochs 9 ausgerichtet wird. Der Abstandshalter und die Unterlegscheibe sind nun am ersten Bauteil 1 vormontiert. Hieraus ergibt sich ein erheblicher Montagevorteil bei der Befestigung der beiden Bauteile, da die gesamte Handbabbarkeit der aus mehreren Teilen bestehenden Vorrichtung beträchtlich erleichtert wird.

Zum Schluß wird die Schraube 12 durch die Öffnung 8, die Bohrung 5 und die Öffnung 9 in die in dem zweiten Bauteil 2 vorgesehene Gewindebohrung 13 eingeschraubt. Hierbei liegt, wie in Fig. 2 gezeigt, die als Scheibe ausgebildete Unterlegscheibe 3 am Schraubenkopf 11 an. Beim Anziehen der Schraube 12 wird die Unterlegscheibe 3 zunächst im ringförmigen Bereich 19 gegen das erste Bauteil 1 gepreßt. Das auf der Stirnseite 22 aufliegende erste Bauteil 1 wird bedingt durch die Schraubenspannkraft wiederum gegen den Abstandshalter 4 gepreßt und dieser gegen das zweite Bauteil 2. Die große tragenden Fläche der Stirnseite 22 der Wände 20 erlaubt hierbei eine gute Kraftübertragung. Da die Stirnseite 23 der Wand 14 in bezug auf die vom Abstandshalter 4 abgewandte Seite des ersten Bauteils etwas in Richtung des zweiten Bauteils 2 zurückversetzt ist, ist sichergestellt, daß beim Anziehen der Schraube 12 die Unterlegscheibe 3 zunächst im Bereich 19 gegen das Bauteil 1 gepreßt wird. Erst beim weiteren Anziehen der Schraube 12 wird die Unterlegscheibe 3 im Bereich der Öffnung 8 etwas verformt und schließlich gegen die Stirnseite 23 der Wände 14 des Abstandshalter 4 gepreßt. Das Bauteil 1 wird durch den Abstandshalter im Abstand a zum zweiten Bauteil 2 gehalten. Zum gegenseitigen Ausrichten der Bauteile wird entweder die Schraube 12 noch nicht fest angezogen oder wieder etwas gelöst, so daß eine Verschiebung des ersten Bauteils 1 zusammen mit der damit verbundenen Unterlegscheibe 3 und dem Abstandshalter 4 in bezug auf den Schraubenschaft 10 und das Bauteil 2 ermöglicht wird. Dabei kann die Position des Abstandshalters 4 und der damit über die Finger 15 verbundenen Unterlegscheibe 3 nur durch eine Drehung in bezug auf das erste Bauteil 1 verändert werden.

Sollte es bei der Ausrichtung der Bauteile notwendig sein, daß erste Bauteil 1 in bezug auf das zweite Bauteil 2 seitlich in eine bestimmte Richtung zu verschieben, so wird zunächst die Unterlegscheibe 3 mit der Längsachse des Langlochs 8 in diese Richtung verdreht, wobei gleichzeitig über die Finger 15 die Längsachse des Langlochs 9 des Abstandshalters 4 in dieselbe Richtung gedreht wird. Das erste Bauteil 1 kann in diese Richtung verschoben werden, wobei der Schraubenschaft 10 der Schraube 12 in Richtung der Längsachse der Langlöcher 8 und 9 verschoben wird. Befindet sich das erste Bauteil 1 in bezug auf das Bauteil 2 in der gewünschten Position, so wird die Schraube 12 nun erneut angezogen.

Alternativ zu dem hier gezeigten Ausführungsbeispiel ist es auch möglich, falls daß zweite Bauteil 2 beispielsweise eine Blechplatte ist, an Stelle der in dem zweiten Bauteil 2 vorgesehenen Gewindebohrung 13 das zweite Bauteil 2 mit einfachen Bohrungen zu versehen und die Schrauben 12 zunächst durch diese Bohrungen zu führen, so daß der Schraubenkopf an der von dem ersten Bauteil 1 abgwandten Rückseite des zweiten Bauteils 2 anliegt. In diesem Fall erstreckt sich nun der Schraubenschaft 10 in Richtung des ersten Bauteils 1. Beim Aufsetzen des ersten Bauteils 1 mit dem Abstandshalter 4 und der Unterlegscheibe 3 wird dann der Schraubenschaft durch die Öffnungen 9, 5 und 8 geführt und ragt mit seinem vom Schraubenkopf abgewandten Ende über die Unterlegscheibe 3 hinaus. Auf dieses Ende kann nun eine Schraubenmutter gesetzt werden, wobei nun die Schraubenmutter als Spannteil dient. Weiterhin ist denkbar, an Stelle der Schrauben 12 Gewindestifte und Schraubenmuttern oder andere schraubbare Verbindungsmittel zu verwenden.

## Patentansprüche

1. Vorrichtung zur gegenseitigen Ausrichtung und Befestigung eines mit einer Öffnung (5) zur Durchführung einer Schraube (12) versehenen ersten Bauteils (1) an einem zweiten Bauteil (2), umfassend
- einen zwischen einander zugewandte Seiten der beiden Bauteile einsetzbaren Abstandshalter (4) mit einer Öffnung (9) zur Durchführung der Schraube (12),
- eine mit einer Öffnung (8) zur Durchführung der Schraube (12) versehene Unterlegscheibe (3), durch welche die Öffnung (5) des ersten Bauteils (1) bei Auflage auf der von dem Abstandshalter (4) abgewandten Seite des ersten Bauteils (1) überbrückbar ist,
- und eine Schraube (12) mit einem Spannteil (11), Schraubenkopf oder Schraubenmutter, welche zur Festlegung der Bauteile (1,2) durch die Öffnung (8) der Unterlegscheibe (3) und die Öffnung (9) des Abstandshalters (4) hindurchführbar ist,
**dadurch gekennzeichnet,** daß die in dem Abstandshalter (4) ausgebildete Öffnung (9) ein Langloch ist,
daß die in der Unterlegscheibe (8) ausgebildete Öffnung ebenfalls ein Langloch gleicher Größe ist und
daß der Abstandshalter (4) wenigstens zwei senkrecht zu den Auflagebereichen (21,22) des ersten und zweiten Bauteils (1,2) abstehende Finger (15) aufweist, welche in einer Position in der das in der Unterlegscheibe (3) vorgesehene Langloch (8) gleichartig zu dem in dem Abstandshalter (4) vorgesehenen Langloch (9) ausgerichtet ist, durch zwei weitere in der Unterlegscheibe (3) vorgesehene Öffnungen (7) hindurchführbar sind.

2. Vorrichtung nach Anspruch 1, **dadurch gekennzeichnet,** daß die Finger (15) spreizbar sind und an ihren durch die Öffnungen (7) der Unterlegscheibe (3) hindurchführbaren Enden (17) mit Haken (16) versehen sind, welche bei Durchführung aer Enden (17) durch die Öffnungen (7) aufspreizen und hinter den Öffnungen (7) einhaken.

3. Verwendung der Vorrichtung nach einem der Ansprüche 1 oder 2 zur Ausrichtung und Befestigung eines mit einer Öffnung (5) versehenen ersten Bauteils (1) an einem zweiten Bauteil (2), **dadurch gekennzeichnet,** daß bei zwischen den aneinander zugewandten Seiten der Bauteile eingesetzten Abstandshalter (4) die Finger (15) die Lage des Abstandshalters (4) in bezug auf die in dem ersten Bauteil eingebrachte Öffnung (5) derartig festlegen, daß der Abstandshalter (4) nur noch um eine Achse gedreht werden kann, welche durch den Mittelpunkt der Öffnung (5) verläuft.

4. Verwendung der Vorrichtung nach einem der Ansprüche 1 oder 2 zur Ausrichtung und Befestigung eines mit einer Öffnung (5) versehenen ersten Bauteils (1) an einem zweiten Bauteil (2), **dadurch gekennzeichnet**, daß bei zwischen den aneinander zugewandten Seiten der Bauteile eingesetzten Abstandshalter (4) die die Länge des Langlochs (9) begrenzenden Enden (26,27) einer Wand (14) teilweise in die Öffnung (5) hineinragen und die Lage des Abstandshalters (4) in bezug auf die Öffnung (5) derartig festlegen, daß der Abstandshalter (4) nur noch um eine Achse gedreht werden kann, welche durch den Mittelpunkt der Öffnung (5) verläuft.

## Claims

1. Appliance for the mutual alignment and fastening of a first component (1), which is provided with an opening (5) for the passage of a screw (12), to a second component (2), comprising
- a distance piece (4), which can be inserted between mutually facing sides of the two components, with an opening (9) for the passage of the screw (12),
- a washer (3), which is provided with an opening (8) for the passage of the screw (12), which washer, on contact with the side of the first component (1) facing away from the distance piece (4), can bridge over the opening (5) in the first component (1),
- and a screw (12) with a tensioning part (11), screw head or screw nut, which screw can be passed through the opening (8) of the washer (3) and the opening (9) of the distance piece (4) in order to secure the components (1, 2),
characterized in that the opening (9) formed in the distance piece (4) is an elongated hole,
in that the opening formed in the washer (8) is likewise an elongated hole of the same size and
in that the distance piece (4) has at least two fingers (15) protruding at right angles to the contact regions (21, 22) of the first and second components (1, 2), which fingers can be passed through two further openings (7) provided in the washer (3) in a position in which the elongated hole (8), which is provided in the washer (3), is uniformly aligned with the elongated hole (9), which is provided in the distance piece (4).

2. Appliance according to Claim 1, characterized in that the fingers (15) can be spread and are provided with hooks (16) on their ends (17) which can be passed through the openings (7) in the washer (3), which fingers spread out when their ends (17) are passed through the openings (7) and hook in behind the openings (7).

3. Use of the appliance according to one of Claims 1 or 2 for aligning and fastening a first component (1), which is provided with an opening (5), to a second component (2), characterized in that, when a distance piece (4) is inserted between the mutually facing sides of the components, the fingers (15) secure the location of the distance piece (4) relative to the opening (5), which is introduced in the first component, in such a way that the distance piece (4) can only be rotated about one axis, which extends through the centre of the opening (5).

4. Use of the appliance according to one of Claims 1 or 2 for aligning and fastening a first component (1), which is provided with an opening (5), to a second component (2), characterized in that, when a distance piece (4) is inserted between the mutually facing sides of the components, the ends (26, 27), of a wall (14), limiting the length of the elongated hole (9) penetrate partly into the opening (5) and secure the location of the distance piece (4) relative to the opening (5) in such a way that the distance piece (4) can only be rotated about one axis, which extends through the centre of the opening (5).

## Revendications

1. Dispositif pour fixer et aligner un élément (1) muni d'un orifice (5) destiné au passage d'une vis (12), à un élément (2), comprenant :
- une entretoise (4) munie d'un orifice (9), à insérer entre les faces se faisant vis à vis des deux éléments, pour le passage de la vis (12),
- une rondelle (3) ayant un orifice (8) destiné au passage de la vis (12), qui peut recouvrir l'orifice (5) du premier élément (1) sur sa face opposée à l'entretoise (4), et
- une vis (12) comportant une partie de serrage (11), une tête de vis ou un écrou, et pouvant traverser pour la fixation des éléments (1, 2), l'orifice (8) de la rondelle (3) et l'orifice (9) de l'entretoise (4),
caractérisé en ce que
- l'orifice (9) ménagé dans l'entretoise (4) est un trou oblong,
- l'orifice (8) ménagé dans la rondelle (3) est également un trou oblong de mêmes dimensions, et
- l'entretoise (4) présente, perpendiculairement aux surfaces d'appui (21, 22) du premier et du deuxième élément (1, 2), au moins deux doigts (15) en saillie qui, placés dans une position dans laquelle le trou oblong (8) de la rondelle (3) est aligné avec le trou oblong (9) de l'entretoise (4), peuvent traverser deux perçages (7) ménagés dans la rondelle (3).

2. Dispositif selon la revendication 1,
caractérisé en ce que
les doigts (15) peuvent s'écarter et leurs extrémités (17) pouvant traverser les orifices (7) de la rondelle (3) sont pourvues de crochets (16) qui s'écartent au moment de la traversée des orifices (7) par les extrémités (17) et viennent s'accrocher derrière ces orifices (7).

3. Utilisation du dispositif selon l'une des revendications 1 ou 2, pour aligner et fixer l'un des éléments (1), pourvu d'un orifice (5) à un deuxième élément (2),
caractérisée en ce que
lorsque l'entretoise (4) est interposée entre les côtés des deux éléments se faisant face, les doigts (15) déterminent la position de l'entretoise (4) en fonction de l'orifice (5) ménagé dans le premier élément, de telle façon que l'entretoise (4) ne peut plus tourner qu'autour d'un axe passant par le centre de l'orifice (5).

4. Utilisation du dispositif selon l'une des revendications 1 ou 2, pour aligner et fixer l'un des éléments (1) pourvu d'un orifice (5) à un deuxième élément (2),
caractérisée en ce que
lorsque l'entretoise (4) est interposée entre les côtés des deux éléments se faisant face, les extrémités (26, 27) d'une paroi (14) déterminant la longueur du trou oblong (9) pénètrent partiellement dans l'orifice (5) et déterminent la position de l'entretoise par rapport à l'orifice (5) de telle façon que l'entretoise (4) ne peut plus tourner qu'autour d'un axe passant à travers le centre de l'orifice (5).
